# EUROPÄISCHE PATENTSCHRIFT

(11) **EP 0 793 867 B1**
(45) Veröffentlichungstag und Bekanntmachung des Hinweises auf die Patenterteilung: **07.07.1999**
(21) Anmeldenummer: 96934466.2
(22) Anmeldetag: 25.09.1996
(51) Int. Cl.: H01S 3/06, H01S 3/094, C03B 37/01

(54) **DOPPELKERN-LICHTLEITFASER, VERFAHREN ZU IHRER HERSTELLUNG, DOPPELKERN-FASERLASER UND DOPPELKERN-FASERVERSTÄRKER**
DOUBLE-CORED OPTICAL FIBRE, PROCESS FOR THEIR PRODUCTION, DOUBLE-CORED FIBRE LASER AND DOUBLE-CORED FIBRE AMPLIFIER
FIBRE OPTIQUE A DOUBLE NOYAU, PROCEDE DE FABRICATION CORRESPONDANT, FIBRE LASER A DOUBLE NOYAU ET AMPLIFICATEUR A FIBRE A DOUBLE NOYAU

(30) Priorität: 25.09.1995 DE 19535526
(43) Veröffentlichungstag der Anmeldung: 10.09.1997
(73) Patentinhaber: LDT GmbH & Co. Laser-Display-Technologie KG, 07552 Gera (DE)
(72) Erfinder: ZELLMER, Holger, D-30419 Hannover (DE); BONSE, Jörn, D-31275 Lehrte-Arpke (DE); UNGER, Sonja, D-07743 Jena (DE); REICHEL, Volker, D-07743 Jena (DE)
(74) Vertreter: Geyer, Werner, Dr.-Ing.
(86) Internationale Anmeldenummer: EP9604187
(87) Internationale Veröffentlichungsnummer: WO9712429

(56) Entgegenhaltungen:
- US-A- 4 815 079
- US-A- 5 373 576
- US-A- 5 418 880

## Beschreibung

### Technisches Gebiet

Die Erfindung betrifft eine Doppelkern-Lichtleitfaser gemäß dem Oberbegriff des Anspruchs 1.

Die Erfindung betrifft ein Verfahren zur Herstellung einer Doppelkern-Lichtleitfaser gemäß dem Oberbegriff des Anspruchs 5.

Die Erfindung betrifft eine Doppelkern-Faserlaser gemäß dem Oberbegriff des Anspruchs 8.

Die Erfindung betrifft eine Doppelkern-Faserverstärker gemäß dem Oberbegriff des Anspruchs 12.

Die Erfindung findet beispielsweise in der optischen Nachrichtenübertragung, der Lasertechnik, Lasermeßtechnik, Medizintechnik, und der Bilddarstellung mittels Laserstrahlung Anwendung.

### Stand der Technik

Aus "Optics Letters", Vol. 20 Nr. 6 Seiten 578-580 ist bereits ein Doppelkern-Faserlaser mit einem im Querschnitt runden Pumpkern bekannt, in dem ein Laserkern zentrisch angeordnet ist und von einer Umhüllung umgeben ist. Dieser bekannte Doppelkern-Faserlaser hat den Nachteil, daß nur ein Teil des Pumplichts im zentrischen Laserkern absorbiert wird, weil sich im Inneren des Pumpkerns sogenannte Helixstrahlen ausbilden, die den Laserkern nicht kreuzen und daher nicht absorbiert werden.

Aus der US-A-5 418 880 ist eine Faser bekannt, die einen azentrierten Kern und eine polygonförmige innere Umhüllung aufweist, um möglichst viel Licht im Kern zu sammeln.

Aus der US-PS 4 815 079 ist ein Doppelkern-Faserlaser mit rundem Pumpkern und azentrischem Laserkern bekannt. Dieser Doppelkern-Faserlaser ist ebenfalls schwer zu fertigen und der Laserkern neigt dazu, sich im Querschnitt ellipsenförmig zu verformen. Aus der Patentschrift ist ferner ein Doppelkern-Faserlaser mit einem im Querschnitt rechteckigem Pumpkern und zentrischem Laserkern bekannt. Auch dieser Doppelkern-Faserlaser ist nur mit hohem Aufwand zu fertigen. An den Kanten des Pumpkerns treten Pumplichtverluste auf und die Einkopplung von Pumplicht aus Diodenlasern ist aufgrund der rechteckigen Geometrie schwerer als bei Doppelkern-Faserlasern mit rundem Pumpkern. Ferner sind Faserlaser mit rechteckigem Querschnitt nicht zu Standard-Faserkomponenten kompatibel.

### Aufgabe der Erfindung

Die Aufgabe der vorliegenden Erfindung besteht darin, eine neuartige Doppelkern-Lichtleitfaser zu entwickeln, die einfacher herstellbar ist, eine höhere Effizienz im Verstärkerbetrieb aufweist, und kompatibel zu faseroptischen Herstellungsverfahren und Standardkomponenten ist. Weiterhin sollen ein Doppelkern-Faserlaser und ein Doppelkern-Faserverstärker angegeben werden, die einfach herstellbar sind und eine im wesentlichen vollständige Absorption des Pumplichts im Laserkern ermöglichen und damit einen hohen optischen Wirkungsgrad erreichen.

### Wesen der Erfindung

Diese Aufgabe wird durch die Erfindung bei einer Doppelkern-Lichtleiffaser gemäß dem Oberbegriff mit den kennzeichnenden Merkmalen des Anspruchs 1 gelöst. Diese Aufgabe wird durch die Erfindung bei einem Verfahren zur Herstellung einer Doppelkern-Lichtleitfaser gemäß dem Oberbegriff durch die kennzeichnenden Merkmale des Anspruchs 5 gelöst.

Diese Aufgabe wird durch die Erfindung bei einem Doppelkern-Faserlaser gemäß dem Oberbegriff durch die kennzeichnenden Merkmale des Anspruchs 8 gelöst.

Diese Aufgabe wird durch die Erfindung bei einem Doppelkern-Faserlaser gemäß dem Oberbegriff durch die kennzeichnenden Merkmale des Anspruchs 12 gelöst.

Die vorteilhaften Weiterbildungen der erfindungsgemäßen Aufgabenlösungen sind in den, den jeweiligen Hauptansprüchen zugeordneten, Unteransprüchen angegeben.

Die Erfindung schlägt eine Doppelkern-Lichtleitfaser mit einen runden Pumpkern vor, die einen zentrisch eingebetteten Laserkern aufweist und der außenseitig wenigstens einen in Längsrichtung (Richtung der Lichtausbreitung) der Doppelkern-Lichtleitfaser verlaufenden Abschliff aufweist, so daß ein im Querschnitt D-förmiger Pumpkern entsteht. Durch diesen Abschliff wird die Symmetrie des Pumpkerns gebrochen, wodurch sich keine Helixstrahlen mehr ausbilden können. Stattdessen wird der Strahlverlauf im Pumpkern chaotisch, wodurch erreicht wird, daß das eingekoppelte Pumplicht nahezu vollständig im Laserkern absorbiert wird. Die im wesentlichen runde Faser mit zentrischem Laserkern erlaubt eine einfache Verbindung mit faseroptischen Komponenten sowie eine einfache Einkopplung des Pumplichts.

Das Verfahren zur Herstellung der erfindungsgemäßen Doppelkern-Lichtleiffaser erfordert gegenüber den Standardverfahren nur einen relativ einfach zu beherrschenden Verfahrensschritt: Das Anschleifen der Zylinderfläche der Preform, was mittels üblicher Planschleifmaschinen erfolgen kann, die in der optischen Industrie verwendet werden.

Die mit der erfindungsgemäßen Doppelkern-Lichtleitfaser aufgebauten Doppelkern-Faserlaser erreichen im Vergleich zu herkömmlichen Faserlasern einen höheren optischen Wirkungsgrad und benötigen eine geringere Faserlänge zur vollständigen Pumplichtabsorption. Durch den im wesentlichen runden Pumpkern ist die Einkopplung von Pumpstrahlung insbesondere aus fasergekoppelten Pumpquellen besonders einfach und mit geringen Verlusten zu realisieren.

Die mit der erfindungsgemäßen Doppelkern Lichtleitfaser aufgebauten Doppelkern-Faserverstärker erreichen einen höheren optischen Wirkungsgrad als mit herkömmlichen Doppelkernfasern aufgebaute Faserverstärker. Durch den im wesentlichen runden Pumpkern ist die Einkopplung von Pumpstrahlung insbesondere aus fasergekoppelten Pumpquellen besonders einfach und mit geringen Verlusten zu realisieren.

### Kurze Beschreibung der Zeichnungen

Die Erfindung soll nachfolgend anhand von Figuren näher erläutert werden. Es zeigen:
- Fig. 1: schematisch den prinzipiellen Aufbau eines Doppelkern-Faserlasers,
- Fig. 2: eine Doppelkern-Faser mit rundem Pumpkern gemäß dem Stand der Technik,
- Fig. 3: eine erfindungsgemäß ausgebildeten Doppelkern-Lichtleiffaser im Querschnitt
- Fig. 4: einen Teil eines Schnittes B-B durch die Doppelkern-Lichtleitfaser nach Fig. 3
- Fig. 5: eine grafische Darstellung der Pumplichtabsorption in Abhängigkeit von der Größe des Abschliffs und der Faserlänge,
- Fig. 6: schematisch den prinzipiellen Aufbau eines Doppelkern-Faserverstärkers.

### Wege zur Ausführung der Erfindung

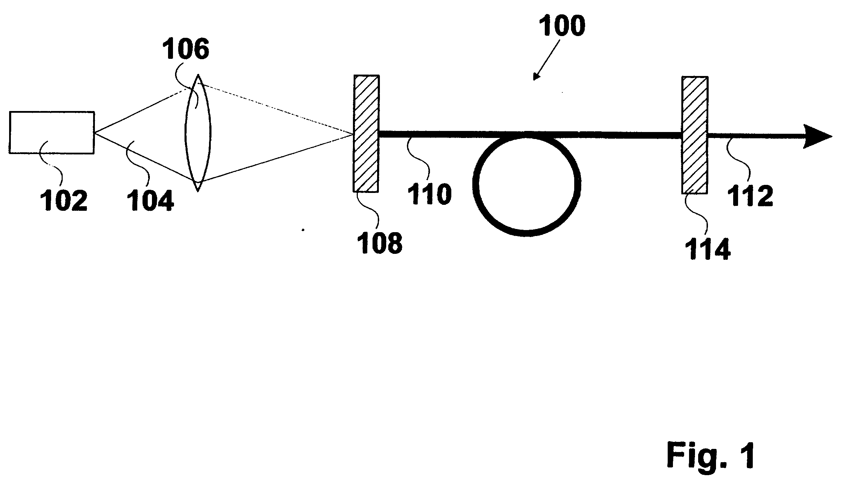

Die Fig.1 zeigt den prinzipiellen Aufbau eines Faserlasers 100, bestehend aus einer Laserdiode 102, deren Strahlung 104 über eine Koppeloptik 106 und einen Einkoppelspiegel 108 in eine Doppelkern-Lichtleiffaser 110 eingekoppelt wird. Die in der Faser 110 erzeugte Laserstrahlung 112 wird über einen Auskoppelspiegel 114 ausgekoppelt. Die beiden Spiegel 108 und 114 sind unmittelbar an den Faserenden angeordnet.

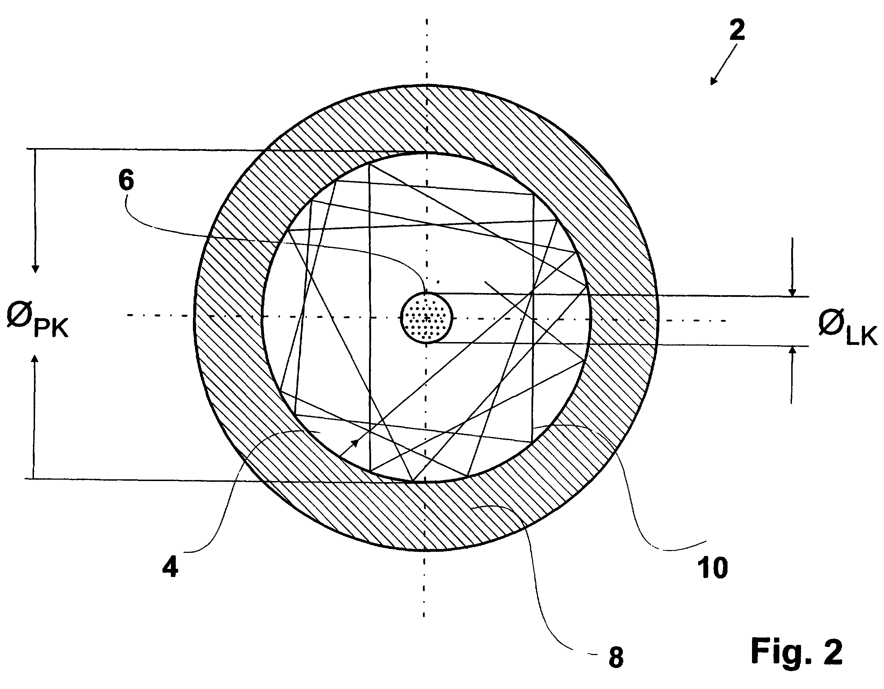

Die Fig. 2 zeigt eine aus dem Stand der Technik bekannte Doppelkern-Lichtleiffaser 2 im Querschnitt. Diese Doppelkern-Lichtleitfaser weist einen Pumpkern 4 mit rundem Querschnitt auf, der beispielsweise aus Quarzglas gefertigt ist. In dem Pumpkern 4 ist zentrisch ein runder Laserkern 6 angeordnet, der beispielsweise aus einem mit Neodym oder einem anderen Selten-Erd-Metall dotierten Medium besteht. Der Pumpkern 4 ist auf seinem Außendurchmesser mit einer Umhüllung 8 umgeben, die beispielsweise aus einem transparenten Polymer oder Glas mit einem gegenüber dem Pumpkern niedrigerem Brechungsindex besteht. Der Pumpkern 4 dient sowohl aus Umhüllung für den Laserkern 6 als auch als Wellenleiter mit hoher numerischer Apertur für das Pumplicht.

Die Fig. 2 verdeutlicht, daß sich bei einer herkömmlichen Doppelkern-Lichtleitfaser mit im Querschnitt kreisrundem Pumpkern 4 überwiegend Helixstrahlen 10 ausbilden, die den Laserkern 6 nicht kreuzen und daher vom Laserkern nicht absorbiert werden können. Solche Doppelkern-Lichtleitfasern können daher im Laserbetrieb nur etwa 10% der Pumpstrahlung absorbieren.

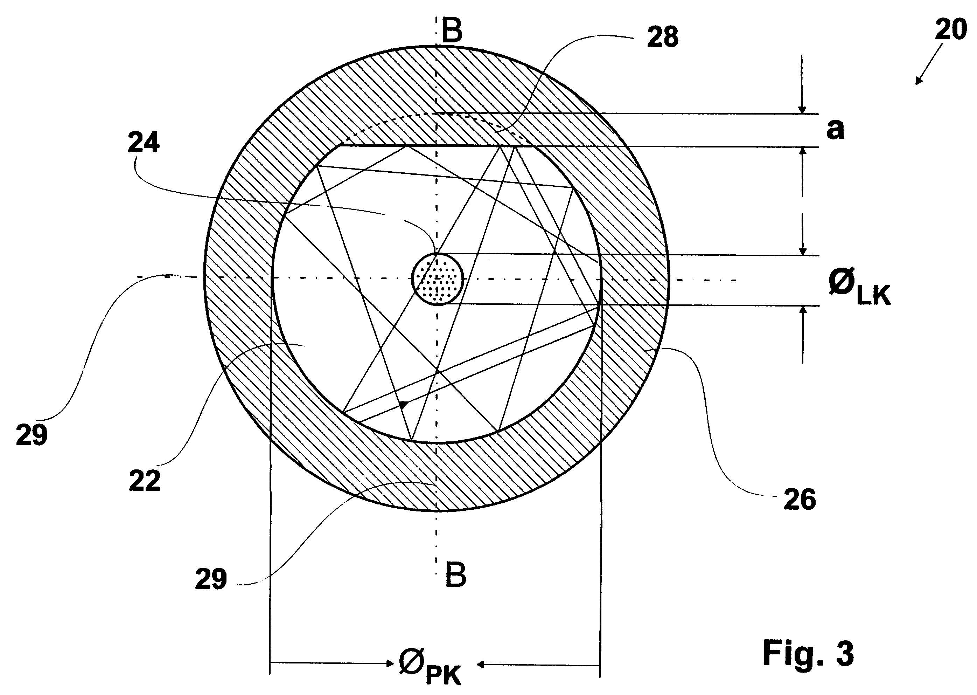

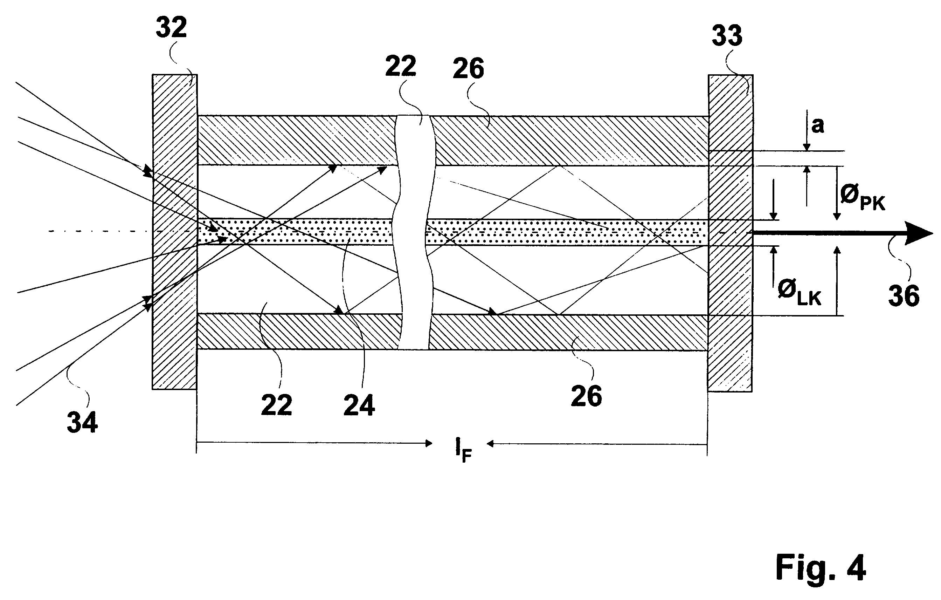

Die Fig. 3 zeigt einen Querschnitt und Fig. 4 einen Längsschnitt einer erfindungsgemäß ausgebildeten Doppelkern-Lichtleitfaser 20 mit einem beispielsweise aus Quarzglas bestehendem Pumpkern 22, in dem ein runder, beispielsweise aus Neodym-dotiertem Medium bestehender Laserkern 24 bezogen zu einer gemeinsamen Symmetrieachse 29 zentrisch angeordnet ist und von einer transparenten Umhüllung 26 umgeben ist, die einen niedrigen Brechungsindex aufweist und beispielsweise aus einem Polymer besteht.

Die Darstellung der Doppelkern-Lichtleiffaser 20 enthält in Figur 4 noch Spiegel 32 und 33, die auf die Enden der Faser aufgebracht, zum Beispiel aufgedampft sind, so daß eine Laserresonatoranordnung vorliegt.

Anders als bei herkömmlichen Doppelkern-Lichtleitfasern 2 nach Fig. 2 ist der Pumpkern 22 gemäß Figur 3 und Figur 4 an seiner Umfangsfläche mit einem Abschliff 28 in Längsrichtung der Faser versehen und im übrigen Querschnitt kreisrund ausgebildet. Durch den Abschliff 28 wird die Kreis-Symmetrie der Doppelkern-Lichtleiffaser gebrochen.

Die Fig. 3 verdeutlicht, daß sich durch den Abschliff 28 ein chaotischer Strahlverlauf ausbildet, wodurch im Verlauf der Längenausdehnung der Doppelkern-Lichtleitfaser praktisch alle in der Faser geführten Lichtanteile mit dem Laserkern 24 in Wechselwirkung treten können und bei entsprechender Faserlänge eine nahezu 100%ige Absorption des Pumplichts erreicht wird. Der Abschliff verhindert die Ausbildung von Helixstrahlen und ist leicht herstellbar.

Es können jedoch auch mehr als ein solcher Abschliff am Pumpkern vorgesehen sein, beispielsweise drei Abschliffe in einem Winkel von 120°, die so zu bemessen sind, daß die im wesentlichen runde Form des Pumpkerns erhalten bleibt.

Mögliche Abmessungen der Doppelkern-Lichtleitfaser 20 sind wie folgt:

| | |
|---|---|
| Pumpkerndurchmesser ⌀_{PK} (an der Stelle ohne Abschliff) | 10 bis 600 µm |
| Laserkerndurchmesser ⌀_{LK} | 1,5 bis 20 µm |
| Stärke der Umhüllung | 5 bis 100 µm |
| Abschliff a | 1 bis 49 % des Pumpkerndurchmessers ⌀_{PK} |

Für eine Laseranwendung ist die Länge der verwendeten Faser I_{F} zweckmäßigerweise zwischen 0,3 bis 50 m zu bemessen, für Verstärkeranwendungen zwischen 0,3 und 10 m.

Zur Ausführung eines Faserresonators sind, wie dies in der Fig. 1 und in Fig. 4 dargestellt ist, auf den Enden der Doppelkern-Lichtleitfaser Dielektrische Spiegel angeordnet, wobei auf der Pumpseite bzw. Einkoppelseite ein Spiegel 108 (Fig. 1) bzw. 32 (Fig. 4) mit hohem Reflexionsgrad für das Laserlicht und mit hohem Transmissionsgrad für das Pumplicht 104 (Fig. 1) bzw. 34 (Fig. 4) und auf der Auskoppelseite ein Spiegel 114 (Fig. 1) bzw. 33 (Fig. 4) mit hohem Reflexionsgrad für das Pumplicht und hohem Transmissionsgrad für das Laserlicht 112 (Fig.1) bzw. 36 (Fig. 4) verwendet wird. Die Spiegel 32 und 33 bzw. 108 und 114 können direkt auf die Faserendfläche aufgebracht werden oder es können Spiegel auf die Faserendfläche gepreßt werden oder vor die Faserenden gestellt werden.

Die Pumpstrahlung wird innerhalb der Doppelkern-Lichtleitfaser an der Grenzfläche Umhüllung 26 - Pumpkern 22 mehrfach reflektiert, kreuzt dabei nach einer oder mehreren Reflexionen den Laserkern 24, mit dem das Licht wechselwirkt bis es im Laserkern 24 absorbiert ist.

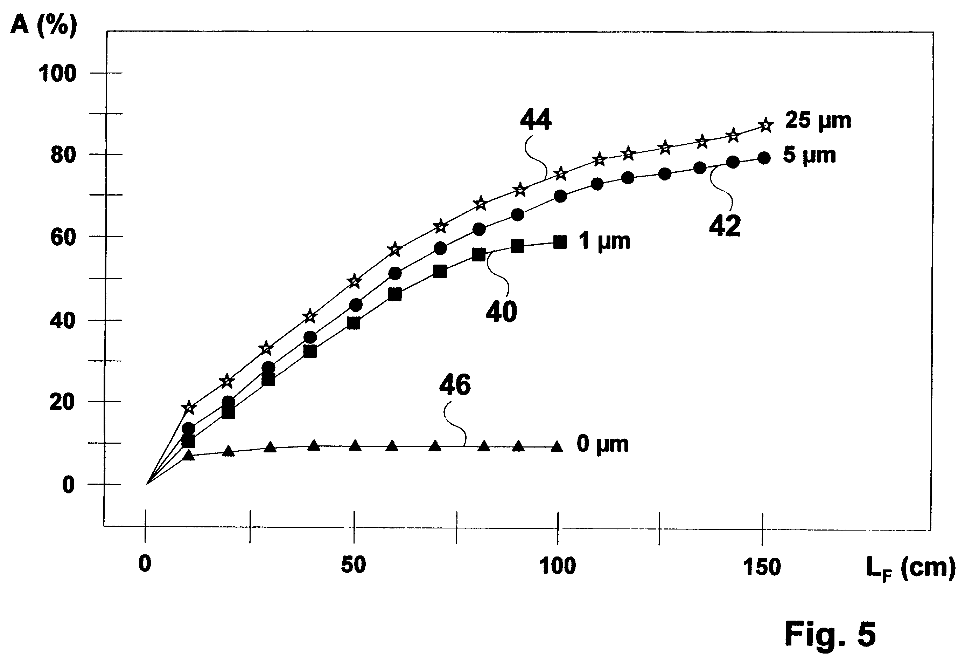

Die Fig. 5 zeigt eine Darstellung der Pumplichtabsorption A in einem Doppelkern-Faserlaser gemäß den Figuren 1 und 4 in Abhängigkeit vom Abschliff und der Faserlänge I_{F}. Die Kurven 40 mit 1 µm Abschliff, 42 mit 5 µm Abschliff und 44 mit 25 µm Abschliff von einem Pumpkern mit 100 µm Durchmesser zeigen die Pumplichtabsorption A im Vergleich zu einer Doppelkern-Lichtleitfaser mit rundem Pumpkern, 0 µm Abschliff, nach Stand der Technik, vgl. Kurve 46. Man erkennt, daß die Absorption A schon bei einem sehr wenig abgeschliffenen Pumpkern deutlich über der Absorption A in einer Doppelkern-Lichtleiffaser mit herkömmlichem, runden Pumpkern liegt. Die Absorption A steigt ferner mit zunehmender Faserlänge, während die Zunahme der Absorption mit größer werdendem Abschliff nicht so stark ausgebildet ist.

Die Herstellung der Außengeometrie des Pumpkerns, der den Laserkern enthält, erfolgt durch Abschleifen der Preform im Bereich von 1 bis 49% des Durchmessers der Preform. Die Preform wird nach dem Abschleifen bei niedrigerer als gewöhnlicher Temperatur zur Faser ausgezogen, um die D-förmige Geometrie beizubehalten.

Die stoffliche Zusammensetzung der Laserfasern entspricht der von Standardfasern, wie sie aus der Literatur bekannt sind. Der erforderliche Brechzahlverlauf in der Faser wird durch Kodotierung mit Germanium, Phosphor und Fluor erzeugt.

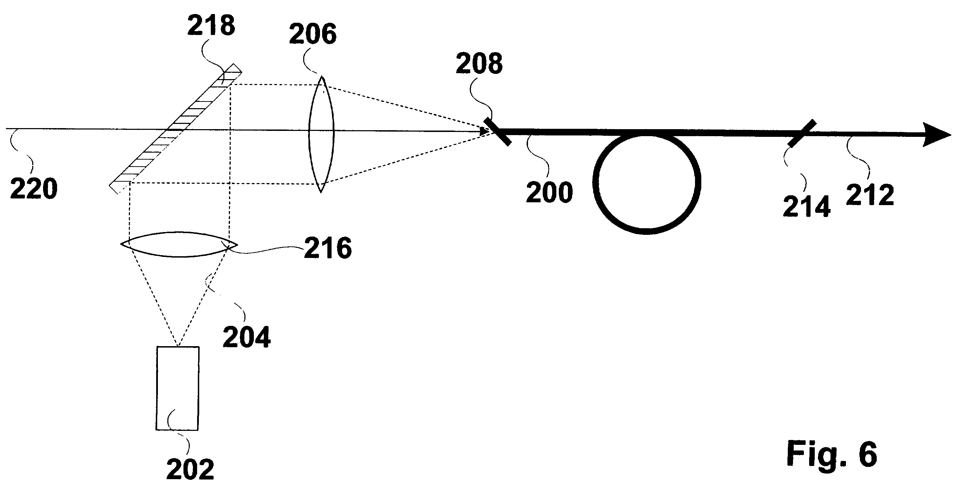

Die Fig. 6 zeigt den prinzipiellen Aufbau eines Doppelkern-Faserverstärkers bestehend aus einer Pumpquelle 202, deren Strahlung 204 mit einem Kollimator 216 kollimiert wird und über eine Strahlvereinigungseinrichtung 218, beispielsweise ein Dichroitischer Spiegel, mit der Koppeloptik 206 in die Doppelkern-Lichtleiffaser 200 über die Faserendfläche 208 eingekoppelt wird. Die Faserendflächen 208 und 214 sind mit einer Antireflexbeschichtung versehen oder unter einem Winkel zur optischen Achse geschnitten, um optische Rückkopplung innerhalb der Doppelkern-Lichtleitfaser zu vermeiden. Die Signalstrahlung 220 wird durch die Strahlvereinigungseinrichtung 218 und die Koppeloptik 206 in die Doppelkern-Lichtleitfaser eingekoppelt. An der der Einkoppelseite gegenüberliegenden Faserendfläche 214 der Doppelkern-Lichtleitfaser wird die verstärkte Signalstrahlung 212 ausgekoppelt.

Beispielhafte Abmessungen für 4-Niveau-Laser- oder -Verstärkersysteme:

| | |
|---|---|
| Laserkerndurchmesser | 5 µm |
| Pumpkerndurchmesser | 125 µm |
| Abschliff | 20 µm |

Ein mit 1300 ppm Neodym dotierter Faserlaser erreicht mit der angegebenen Geometrie und einer Pumpwellenlänge von 810 nm einen optischen Wirkungsgrad von über 40% bei einer Laserwellenlänge von 1060 nm und 2 W Ausgangsleistung.

Beispielhafte Abmessungen für 3-Niveau-Laser- oder -Verstärkersysteme und Up-Conversion Laser:

| | |
|---|---|
| Laserkerndurchmesser | 3,5 µm |
| Pumpkerndurchmesser | 20 µm |
| Abschliff | 5 µm |

Ein mit Praseodym und Ytterbium dotierter Faserlaser kann mit der angegebenen Geometrie einen optischen Wirkungsgrad von über 20% bei einer Laserwellenlänge von 635 nm und über 1 W Ausgangsleistung erreichen.

## Patentansprüche

1. Doppelkern-Lichtleitfaser, die
-- aus einem Pumpkern (22),
-- einem im Pumpkern (22) zentrisch angeordneten Laserkern (24) und
-- einer den Pumpkern (22) umgebenden Umhüllung (26) aufgebaut ist,
**dadurch gekennzeichnet, daß**
- der im Querschnitt im wesentlichen kreisrund ausgebildete Pumpkern (22) außenseitig einen in Lichtrichtung der Doppelkern-Lichtleitfaser (20) verlaufenden Abschliff (28) aufweist, der 1 % bis 49 % des Durchmessers des Pumpkerns (22) beträgt, so daß ein im Querschnitt D-förmiger Pumpkern entsteht.

2. Doppelkern-Lichtleitfaser nach Anspruch 1,
**dadurch gekennzeichnet, daß**
in Abhängigkeit von der Laserlichtwellenlänge und der Anwendung
- der Durchmesser des Pumpkerns (22) ohne Abschliff (28) im Bereich von ⌀_{PK} = 5 µm bis 600 µm und
- der Durchmesser des Laserkerns (24) im Bereich von ⌀_{LK} = 1,5 pm bis 20 pm liegt
und
- der an dem Umfang des Pumpkerns (22) meßbare Abschliff (28) a = 1 µm bis 200 µm beträgt.

3. Doppelkern-Lichtleitfaser nach Anspruch 1, **dadurch gekennzeichnet, daß**
- die Umhüllung (26) der Doppelkern-Lichtleitfaser aus einem Polymer oder Glasmaterial mit einer gegenüber dem Pumpkern (22) niedrigeren Brechzahl und
- einer Dicke größer etwa 5 µm besteht.

4. Doppelkern-Lichtleitfaser nach Anspruch 1, **dadurch gekennzeichnet, daß**
- jede der zwei Endflächen der Doppelkern-Lichtleitfaser orthogonal und/oder in einem Winkel kleiner 90° zur optischen Achse ausgerichtet ist, optische Qualität hat und
- mit einer für bestimmte Wellenlängenbereiche spiegelnden und/oder
entspiegelnden
Schicht, zumindest im Bereich des Laserkerns (24), beschichtet ist.

5. Verfahren zur Herstellung einer Doppelkern-Lichtleitfaser mit den Verfahrensschritten
- Herstellung einer zylinderförmigen Preform aus Quarz oder Glas mit einem Standardverfahren,
- Ziehen der Glasfaser aus der erwärmten Preform,
**dadurch gekennzeichnet, daß**
- die Preform auf der Zylinderaußenfläche nach der Herstellung einen Anschliff erhält, der 1 % bis 49 % des Durchmessers der Preform beträgt und
- die Doppelkern-Lichtleitfaser aus der angeschliffenen Preform gezogen wird, wobei die Ziehtemperatur der Preform so eingestellt wird, daß die Außengeometrie der Preform und die Außengeometrie des Pumpkerns (22) kongruent bleiben, so daß ein im Querschnitt D-förmiger Pumpkern entsteht.

6. Verfahren zur Herstellung einer Doppelkern-Lichtleitfaser nach Anspruch 5,
**dadurch gekennzeichnet, daß**
- die Preform nach dem Anschliff von einer Glasschicht oder Quarzschicht mit niedrigerem Brechungsindex als dem des Materials des späteren Pumpkerns in einer Dicke aufgebracht wird, wobei
die Dicke so gewählt wird, daß die Doppelkern-Lichtleitfaser nach dem Ausziehen der Preform einen Durchmesser von mindestens etwa 80 µm hat.

7. Verfahren zur Herstellung einer Doppelkern-Lichtleiffaser nach Anspruch 5, **dadurch gekennzeichnet, daß**
- der Außendurchmesser der Preform im Bereich von 5 mm bis 20 mm und
- der Anschliff der Preform im Bereich von 1 mm bis 8 mm liegt und
- die Preform mit in Zylinderrichtung gleichbleibenden Außenabmessungen hergestellt wird und
- eine Doppelkern-Lichtleitfaser (100, 200, 20) mit einem gleichbleibenden Durchmesser des Pumpkerns (22), gemessen an der Stelle ohne Abschliff (28), im Bereich von ⌀_{PK} = 5 µm bis 600 µm ausgezogen wird.

8. Doppelkern-Faserlaser (100) bestehend aus in Lichtrichtung angeordneten Baugruppen,
- einer Pumpquelle (Laserdiode 102),
- vorzugsweise einer Einkoppeloptik (106),
- einem ersten dielektrischen Spiegel (108, 32), der mit dem Anfang einer Doppelkern-Lichtleitfaser (110, 20) korrespondiert,
- der Doppelkern-Lichtleitfaser (110, 20), die
-- aus einem Pumpkern (22),
-- einem im Pumpkern (22) zentrisch angeordneten Laserkern (24) und
-- einer dem Pumpkern (22) umgebenden Umhüllung (26) aufgebaut ist, weiterhin
- einem zweiten dielektrischen Spiegel (114, 33), der mit dem Ende der Doppelkern-Lichtleitfaser (110, 20) korrespondiert
**dadurch gekennzeichnet, daß**
- der im Querschnitt im wesentlichen kreisrund ausgebildete Pumpkern (22) außenseitig einen in Lichtrichtung der Doppelkern-Lichtleitfaser (20) verlaufenden Abschliff (28) aufweist, der 1 % bis 49 % des Durchmessers des Pumpkerns (22) beträgt, so daß ein im Querschnitt D-förmiger Pumpkern entsteht.

9. Doppelkern-Faserlaser nach Anspruch 8,
**dadurch gekennzeichnet, daß**
- die Länge der Doppelkern-Lichtleitfaser größer 0,1 m ist.

10. Doppelkern-Faserlaser nach Anspruch 8,
**dadurch gekennzeichnet, daß**
für 4-Niveau-Lasersysteme
- der Durchmesser des Pumpkerns (22) an der Stelle ohne Abschliff (28) ⌀_{PK} = 75 µm bis 600 µm und
- der Durchmesser des Laserkerns (24) ⌀_{LK} = 2 µm bis 20 µm groß sind und
- der am Umfang des Pumpkerns (22) meßbare Abschliff (28) a = 5 µm bis 100 µm beträgt.

11. Doppelkern-Faserlaser nach Anspruch 8,
**dadurch gekennzeichnet, daß**
für 3-Niveau-Lasersyteme und up-conversion-Lasersysteme
- der Durchmesser des Pumpkerns (22) an der Stelle ohne Abschliff (28) ⌀_{PK} = 10 µm bis 50 µm und
- der Durchmesser des Laserkerns (24) ⌀_{LK} = 2 µm bis 10 µm groß sind und
- der am Umfang des Pumpkerns (22) meßbare Abschliff (28) a = 1 µm bis 15 pm beträgt.

12. Doppelkern-Faserverstärker bestehend aus in Lichtrichtung angeordneten Baugruppen,
- einer Pumpquelle (Laserdiode 202),
- vorzugsweise einer Kollimatoroptik (216),
- einer Einrichtung zur Strahlvereinigung (dichroitischer Spiegel 218),
- vorzugsweise einer Einkoppeloptik (206),
- einer entspiegelnden oder gegenüber der optischen Achse schräg gestellten Faserendfläche als Eingang für das Pumplicht und das optische Signal,
- der Doppelkern-Lichtleitfaser (200), die
-- aus einem Pumpkern (22),
-- einem im Pumpkern (22) zentrisch angeordneten Laserkern (24) und
-- einer dem Pumpkern (22) umgebenden Umhüllung (26) aufgebaut ist, weiterhin
- einer entspiegelnden oder gegenüber der optischen Achse schräg gestellten Faserendfläche als Ausgang für das verstärkte optische Signal
**dadurch gekennzeichnet, daß**
- der im Querschnitt im wesentlichen kreisrund ausgebildete Pumpkern (22) außenseitig einen in Lichtrichtung der Doppelkern-Lichtleitfaser (20) verlaufenden Abschliff (28) aufweist, der 1 % bis 49 % des Durchmessers des Pumpkerns (22) beträgt, so daß ein im Querschnitt D-förmiger Pumpkern entsteht.

13. Doppelkern-Faserverstärker nach Anspruch 12,
**dadurch gekennzeichnet, daß**
- die Länge der Doppelkern-Lichtleitfaser größer 0,1 m ist und
- die größte Länge dadurch bestimmt ist, daß das verstärkte optische Signal im Betrieb größer als die verstärkte Spontanemission ist, wobei die größte Doppelkern-Faserlänge kleiner 50 m ist.

14. Doppelkern-Faserverstärker nach Anspruch 12,
**dadurch gekennzeichnet, daß**
für 4-Niveau-Systeme
- der Durchmesser des Pumpkerns (22) an der Stelle ohne Abschliff (28) ⌀_{PK} = 75 µm bis 600 µm und
- der Durchmesser des Laserkerns (24) ⌀_{LK} = 2 µm bis 20 µm groß sind und
- der am Umfang des Pumpkerns (22) meßbare Abschliff (28) a = 5 µm bis 100 µm beträgt.

15. Doppelkern-Faserverstärker nach Anspruch 12, für sichtbares Licht,
**dadurch gekennzeichnet, daß**
3-Niveau-Lasersysteme und up-conversion-Lasersysteme
- der Durchmesser des Pumpkerns (22) an der Stelle ohne Abschliff (28) ⌀_{PK} = 10 µm bis 50 µm und
- der Durchmesser des Laserkerns (24) ⌀_{LK} = 2 µm bis 10 µm groß sind und
- der am Umfang des Pumpkerns (22) meßbare Abschliff (28) a = 1 µm bis 15 µm beträgt.

## Claims

1. Double core optical fibre which is constructed from a pump core (22), a laser core (24) arranged centrally in the pump core (22) and a sheath (26) surrounding the pump core (22), characterised in that the pump core (22) which is substantially circular in cross section externally has a ground region (28) which extends in the light direction of the double core optical fibre (20) and is 1% to 49% of the diameter of the pump core (22) so that a pump core which is D-shaped in cross section is formed.

2. Double core optical fibre according to claim 1, characterised in that, depending on the wavelength of the laser light and the application, the diameter of the pump core (22) without ground region (28) is in the range of ⌀_{PK} = 5 µm to 600 µm and the diameter of the laser core (24) is in the range of ⌀_{LK} = 1.5 µm to 20 µm and the ground region (28) measurable at the periphery of the pump core (22) is a = 1 µm to 200 µm.

3. Double core optical fibre according to claim 1, characterised in that the sheath (26) of the double core optical fibre consists of a polymer or glass material with a refractive index which is lower than that of the pump core (22) and a thickness greater than about 5 µm.

4. Double core optical fibre according to claim 1, characterised in that each of the two end faces of the double core optical fibre is orientated orthogonally and/or at an angle smaller than 90° to the optical axis, has optical quality and is coated with a layer which reflects and/or reduces reflection of specific wavelength ranges, at least in the region of the laser core (24).

5. Method of producing a double core optical fibre with the steps of producing a cylindrical quartz or glass preform by a standard method, drawing the glass fibre from the heated preform, characterised in that the preform, on the external surface of the cylinder after production, receives a ground region which is 1% to 49% of the diameter of the preform and the double core optical fibre is drawn from the ground preform, the drawing temperature of the preform being so adjusted that the external geometry of the preform and the external geometry of the pump core (22) remain congruent so that a pump core which is D-shaped in cross section is formed.

6. Method of producing a double core optical fibre according to claim 5, characterised in that the preform is created after the ground region from a glass layer or quartz layer with a lower refractive index than the material of the subsequent pump core in a thickness, the thickness being selected such that the double core optical fibre has a diameter of at least about 80 µm after the drawing of the preform.

7. Method of producing a double core optical fibre according to claim 5, characterised in that the external diameter of the preform is in the range of 5 mm to 20 mm and the ground region of the preform is in the range of 1 mm to 8 mm and the preform is produced with external dimensions which are uniform in the cylinder direction and a double core optical fibre (100, 200, 20) with a uniform diameter of the pump core (22), measured at the point without ground region (28), is drawn out in the range of ⌀_{PK} = 5 µm to 600 µm.

8. Double core fibre laser (100) consisting of modules arranged in the light direction, a pump source (laser diode 102), preferably launching optics (106), a first dielectric reflector (108, 32) which corresponds to the beginning of a double core optical fibre (110, 20), the double core optical fibre (110, 20) which is constructed from a pump core (22), a laser core (24) arranged centrally in the pump core (22) and a sheath (26) surrounding the pump core (22), furthermore a second dielectric reflector (114, 33) which corresponds to the end of the double core optical fibre (110, 20), characterised in that the pump core (22) which is substantially circular in cross section externally has a ground region (28) which extends in the light direction of the double core optical fibre (20) and is 1% to 49% of the diameter of the pump core (22), so that a pump core which is D-shaped in cross section is formed.

9. Double core fibre laser according to claim 8, characterised in that the length of the double core optical fibre is greater than 0.1 m.

10. Double core fibre laser according to claim 8, characterised in that for 4-level laser systems the diameter of the pump core (22) at the point without ground region (28) is ⌀_{PK} = 75 µm to 600 µm and the diameter of the laser core (24) is ⌀_{LK} = 2 µm to 20 µm in size and the ground region (28) measurable at the periphery of the pump core (22) is a = 5 µm to 100 µm.

11. Double core fibre laser according to claim 8, characterised in that, for 3-level laser systems and up-conversion laser systems, the diameter of the pump core (22) at the point without ground region (28) is ⌀_{PK} = 10 µm to 50 µm and the diameter of the laser core (24) is ⌀_{LK} = 2 µm to 10 µm in size and the ground region (28) measurable at the periphery of the pump core (22) is a = 1 µm to 15 µm.

12. Double core fibre amplifier consisting of modules arranged in the light direction, a pump source (laser diode 202), preferably collimator optics (216), a system for combining beams (dichroic reflector 218), preferably launching optics (206), a fibre end face which reduces reflection or is positioned obliquely to the optical axis as input for the pump light or the optical system, the double core optical fibre (200) which is constructed from a pump core (22), a laser core (24) arranged centrally in the pump core (22) and a sheath (26) surrounding the pump core (22), furthermore a fibre end face which reduces reflection or is positioned obliquely to the optical axis as output for the amplified optical signal, characterised in that the pump core (22) which is substantially circular in cross section externally has a ground region (28) which extends in the light direction of the double core optical fibre (20) and is 1% to 49% of the diameter of the pump core (22), so that a pump core which is D-shaped in cross section is formed.

13. Double core fibre amplifier according to claim 12, characterised in that the length of the double core optical fibre is greater than 0.1 m and the maximum length is determined in that the amplified optical signal during operation is greater than the amplified spontaneous emission, the maximum double core fibre length being smaller than 50 m.

14. Double core fibre amplifier according to claim 12, characterised in that, for 4-level systems, the diameter of the pump core (22) at the point without ground region (28) is ⌀_{PK} = 75 µm and 600 µm and the diameter of the laser core (24) is ⌀_{LK} = 2 µm to 20 µm in size and the ground region (28) measurable at the periphery of the pump core (22) is a = 5 µm to 100 µm.

15. Double core fibre amplifier according to claim 12 for visible light, characterised in that for 3-level laser systems and up-conversion laser systems, the diameter of the pump core (22) at the point without ground region (28) is ⌀_{PK} = 10 µm to 50 µm and the diameter of the laser core (24) is ⌀_{LK} = 2 µm to 10 µm in size and the ground region (28) measurable at the periphery of the pump core (22) is a = 1 µm to 15 µm.

## Revendications

1. Fibre optique à double coeur, qui est constituée
-- d'un coeur de pompage (22)
-- d'un coeur laser (24) disposé au centre dans le coeur de pompage (22) et
-- d'une gaine (26) entourant le coeur de pompage (22),
caractérisée en ce que
- le coeur de pompage (22) de section sensiblement circulaire présente extérieurement une partie meulée (28) s'étendant dans la direction de la lumière de la fibre optique à double coeur (20), qui représente entre 1 % et 49 % du diamètre du coeur de pompage (22), de sorte que l'on obtient un coeur de pompage de section en D.

2. Fibre optique à double coeur selon la revendication 1,
caractérisée en ce qu'en fonction de la longueur d'onde de la lumière laser et de l'application,
- le diamètre ⌀_{PK} du coeur de pompage (22) sans partie meulée (28) est compris entre 5 µm et 600 µm et
- le diamètre ⌀_{LK} du coeur laser (24) est compris entre 1,5 µm et 20 µm et
- la partie meulée (28) mesurable sur le périmètre du coeur de pompage (22) est a = 1 µm à 200 µm.

3. Fibre optique à double coeur selon la revendication 1,
caractérisée en ce que
- la gaine (26) de la fibre optique à double coeur est constituée en un polymère ou en un matériau de verre avec un indice de réfraction plus faible que le coeur de pompage (22) et
- une épaisseur supérieure à 5 µm.

4. Fibre optique à double coeur selon la revendication 1,
caractérisée en ce que
- chacune des deux faces terminales de la fibre optique à double coeur est orientée orthogonalement et/ou sous un angle inférieur à 90° par rapport à l'axe optique, présente une qualité optique et
- est pourvue d'une couche réfléchissante et/ou d'une couche antireflet pour des gammes de longueurs d'ondes déterminées, au moins dans la région du coeur laser (24).

5. Procédé de fabrication d'une fibre optique à double coeur présentant les étapes suivantes:
- fabrication d'une préforme cylindrique en quartz ou en verre suivant un procédé standard,
- extraction de la fibre de verre de la préforme chauffée,
caractérisé en ce que
- la préforme est meulée sur la surface extérieure cylindrique après fabrication, la partie meulée représentant de 1 % à 49 % du diamètre de la préforme et
- la fibre optique à double coeur est tirée de la préforme meulée, la température d'étirage de la préforme étant réglée de manière que la géométrie extérieure de la préforme et la géométrie extérieure du coeur de pompage (22) restent congruentes, de manière à obtenir un coeur de pompage de section en D.

6. Procédé de fabrication d'une fibre optique à double coeur selon la revendication 5,
caractérisé en ce que
- la préforme, après meulage d'une couche de verre ou d'une couche de quartz d'un indice de réfraction inférieur à celui du matériau du futur coeur de pompage, est appliquée sur une épaisseur, qui est choisie de manière que la fibre optique à double coeur ait un diamètre d'au moins 80 µm environ, après extraction de la préforme.

7. Procédé de fabrication d'une fibre optique à double coeur selon la revendication 1,
caractérisé en ce que
- le diamètre extérieur de la préforme est compris entre 5 mm et 20 mm et
- la partie meulée de la préforme se situe entre 1 mm et 8 mm et
- la préforme est réalisée avec des dimensions extérieures constantes dans la direction du cylindre et
- une fibre optique à double coeur (100, 200, 20) est extraite avec un diamètre ⌀_{PK} du coeur de pompage (22), mesuré à l'emplacement sans partie meulée (28), compris entre 5 µm et 600 µm.

8. Laser à fibre à double coeur (100) constitué d'ensembles disposés dans la direction de la lumière,
- d'une source de pompage (diode laser 102),
- de préférence d'une optique De couplage (106), d'un premier miroir diélectrique (108, 32), qui correspond au début d'une fibre optique à double coeur (110, 20),
- de la fibre optique à double coeur (110, 20) qui
-- est constituée d'un coeur de pompage (22),
-- d'un coeur laser (24) disposé au centre dans le coeur de pompage (22) et
-- d'une gaine (26) entourant le coeur de pompage (22), ainsi que
- d'un deuxième miroir diélectrique (114, 33), qui correspond à l'extrémité de la fibre optique à double coeur (110, 20),
caractérisé en ce que
- le coeur de pompage (22) de section sensiblement circulaire présente extérieurement une partie meulée (28) s'étendant dans la direction de la lumière de la fibre optique à double coeur (20), qui représente entre 1 % et 49 % du diamètre du coeur de pompage (22), de sorte que l'on obtient un coeur de pompage de section en D.

9. Laser à fibre à double coeur selon la revendication 8,
caractérisé en ce que
- la longueur de la fibre optique à double coeur est supérieure à 0,1 m.

10. Laser à fibre à double coeur selon la revendication 8,
caractérisé en ce que
- pour des systèmes laser à quatre niveaux
- le diamètre ⌀_{PK} du coeur de pompage (22) est compris entre 75 µm et 600 µm à l'emplacement ne présentant pas de partie meulée (28) et
- le diamètre ⌀_{LK} du coeur laser (24) est compris entre 2 µm et 20 µm et
- la partie meulée (28) mesurable sur le périmètre du coeur de pompage (22) est a = 5 µm à 100 µm.

11. Laser à fibre à double coeur selon la revendication 8,
caractérisé en ce que
- pour des systèmes laser à trois niveaux et pour des systèmes laser up-conversion
- le diamètre ⌀_{PK} du coeur de pompage (22) à l'emplacement ne présentant pas de partie meulée (28) est compris entre 10 µm et 50 µm et
- pour des systèmes laser à quatre niveaux
- le diamètre ⌀_{PK} du coeur de pompage (22) est compris entre 75 µm et 600 µm à l'emplacement ne présentant pas de partie meulée (28) et
- le diamètre ⌀_{LK} du coeur laser (24) est compris entre 2 µm et 10 µm et
- la partie meulée (28) mesurable sur le périmètre du coeur de pompage (22) est a = 1 µm à 50 µm.

12. Amplificateur à fibre optique à double coeur constitué d'ensembles disposés dans la direction de la lumière,
- d'une source de pompage (diode laser 202),
- de préférence d'une optique de collimateur (216),
- d'un dispositif de réunion des rayons (miroir dichroïque 218),
- de préférence d'une optique de couplage (206),
- d'une face terminale de fibre antireflet ou disposée obliquement par rapport à l'axe optique en tant qu'entrée pour la lumière de pompage et le signal optique,
- de la fibre optique à double coeur (200), qui est constituée
-- d'un coeur de pompage (22)
-- d'un coeur laser (24) disposé au centre dans le coeur de pompage (22) et
-- d'une gaine (26) entourant le coeur de pompage (22), ainsi que
- d'une face terminale de fibre antireflet ou disposée obliquement par rapport à l'axe optique, en tant que sortie pour le signal optique amplifié,
caractérisé en ce que
- le coeur de pompage (22) de section sensiblement circulaire présente extérieurement une partie meulée (28) s'étendant dans la direction de la lumière de la fibre optique à double coeur (20), qui représente entre 1 % et 49 % du diamètre du coeur de pompage (22), de sorte que l'on obtient un coeur de pompage de section en D.

13. Amplificateur à fibre à double coeur selon la revendication 12, caractérisé en ce que
- la longueur de la fibre optique à double coeur est supérieure à 0,1 m et
- la longueur maximale est déterminée par le fait que le signal optique amplifié est plus important que l'émission spontanée amplifiée, la longueur maximale de la fibre optique à double coeur étant inférieure à 50 m.

14. Amplificateur à fibre à double coeur selon la revendication 12, caractérisé en ce que
- pour des systèmes à quatre niveaux
- le diamètre ⌀_{PK} du coeur de pompage (22) à l'emplacement ne présentant pas de partie meulée (28) est compris entre 75 µm et 600 µm et
- le diamètre ⌀_{LK} du coeur laser (24) est compris entre 2 µm et 20 µm et
- la partie meulée (28) mesurable sur le périmètre du coeur de pompage (22) est a = 5 µm à 100 m.

15. Amplificateur à fibre à double coeur selon la revendication 12 pour la lumière visible,
caractérisé en ce que
- pour des systèmes laser à trois niveaux et des systèmes up-conversion
- le diamètre ⌀_{PK} du coeur de pompage (22) à l'emplacement sans partie meulée (28) est compris entre 10 µm et 50 µm et
- le diamètre ⌀_{LK} du coeur laser (24) est compris entre 2 µm et 10 µm et
- la partie meulée (28) mesurable sur le périmètre du coeur de pompage (22) est a = 1 µm à 50 µm.
